# EUROPEAN PATENT APPLICATION

(11) **EP 4 818 753 A1**
(43) Date of publication of application: **07.10.2026**
(21) Application number: 26162826.7
(22) Date of filing: 06.03.2026
(51) Int. Cl.: G01S 17/04, G01S 17/66, G01S 17/89, G08G 1/01, G08G 1/16, G01S 13/56, G01S 13/931, G01S 17/931

(54) **SYSTEM AND METHOD FOR GENERATING OBJECT TRACKING DATA FOR OPERATIONAL AREA**

(30) Priority: 20.03.2025 FI 20255239
(71) Applicant: Unikie Oy, 33720 Tampere (FI)
(72) Inventor: Sormunen, Toni, 33880 Lempäälä (FI); Kinnunen, Tommi, 67400 Kokkola (FI); Kiviranta, Vesa, 33400 Tampere (FI); Saarela, Kimmo, 85774 Unterföhring (DE)
(74) Representative: Moosedog Oy

(57) **Abstract**

Disclosed is a system (100) for generating object tracking data for an operational area comprises first set of sensors (102A-102E) to capture first three-dimensional (3D) point cloud data and second set of sensors (108A-108E) to capture a second 3D point cloud data, by utilizing at least two sensors; first Node Processing Unit (NPU) (112A) configured to: receive and process the first 3D point cloud data, generate first tracking data of objects in the first subarea and transmit the first tracking data to a central control unit (CCU) (114); second NPU (112B) configured to: receive and process the second 3D point cloud data from the second set of sensors to generate a second tracking data of objects in the second subarea and transmit the second tracking data to the CCU (114); the CCU (114) configured to generate the object tracking data based on the first and the second tracking data.

## Description

### TECHNICAL FIELD

The present disclosure relates to systems for generating object tracking data for operational areas. Moreover, the present disclosure relates to methods for generating object tracking data for operational areas. Furthermore, the present disclosure relates to computer program products.

### BACKGROUND

Autonomous vehicle systems (AVS) have seen significant growth in recent years, transforming modern transportation. These systems rely on various sensors, such as cameras, light detection and ranging (LiDAR) sensor, and radar, to perceive and understand surroundings in real time. While sensor technology has advanced, AVS face key challenges in processing sensor data efficiently for object detection, collision avoidance, and path planning, particularly in environments with occlusions or adverse weather conditions such as rain, fog, or snow.

Conventionally, a centralized processing architecture is used, where raw sensor data is transmitted to a central computing unit for processing and decision-making. This approach leverages high-performance computing platforms and artificial intelligence models but often introduces latency due network congestion and processing bottlenecks. Additionally, reliance on a single processing unit introduces a single point of failure, raising concerns about system reliability in mission-critical applications.

To address these issues, decentralized and edge computing architectures have been explored. These involve processing sensor data locally at edge computing nodes before transmitting refined insights to a central unit. While edge computing reduces processing delays, it introduces challenges such as data synchronization issues, limited computational power, and inefficiencies in handling high-density 3D point cloud data from LiDAR sensors.

Therefore, in light of the foregoing discussion, there exists a need to overcome the aforementioned drawbacks.

### SUMMARY

The aim of the present disclosure is to provide a system, a method, and a computer program product to generate accurate object tracking data by distinguishing dynamic objects from static objects in an operational area.

The aim of the present disclosure is achieved by a system, a method, and a computer program product for generating an object tracking data for an operational area, as defined in the appended independent claims. Advantageous features are set out in the appended dependent claims.

The embodiments of the present disclosure substantially enhance the accuracy and real-time performance of object tracking by utilizing multi-sensor data fusion and localized processing at edge nodes, reducing latency, and improving system reliability.

Additional aspects, advantages, features, and objects of the present disclosure would be made apparent from the drawings and the detailed description of the illustrative embodiments constructed in conjunction with the appended claims that follow.

### BRIEF DESCRIPTION OF THE DRAWINGS

FIG. 1A-C are illustrations of block diagrams of architectures of a system for generating an object tracking data for an operational area, in accordance with an embodiment of the present disclosure;
FIG. 2 is an illustration of an exemplary process flow in a system for generating an object tracking data for an operational area, in accordance with an embodiment of the present disclosure;
FIG. 3 is an illustration of a block diagram of an architecture of a Node Processing Unit of a system for generating an object tracking data for an operational area, in accordance with an embodiment of the present disclosure;
FIG. 4 is an illustration of a block diagram of an architecture of a perception pipeline utilized for a classification of a static and a dynamic object in a system for generating an object tracking data for an operational area, in accordance with an embodiment of the present disclosure;
FIG. 5 is an illustration of a block diagram representing a relation between an environment model and a motion planner of a system for generating an object tracking data for an operational area, in accordance with an embodiment of the present disclosure;
FIG. 6 is an illustration of an exemplary scenario of an operational area of a system for generating an object tracking data for an operational area, in accordance with an embodiment of the present disclosure;
FIG. 7 is an illustration of a digital representation of the exemplary scenario of an operational area of a system for generating an object tracking data for an operational area, in accordance with an embodiment of the present disclosure; and
FIG. 8 is an illustration of steps of a method for generating an object tracking data for an operational area, in accordance with an embodiment of the present disclosure.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practising the present disclosure are also possible.

In a first aspect, the present disclosure provides a system for generating an object tracking data for an operational area, the system comprising:
a first set of sensors arranged to monitor a first subarea of the operational area in which the vehicle is present, wherein the first set of sensors is arranged to capture a first three-dimensional (3D) point cloud data of the first subarea, and wherein each point in the first 3D point cloud data is captured by at least two sensors of the first set of sensors;
a second set of sensors arranged to monitor a second subarea of the operational area in which the vehicle is present, wherein the second set of sensors is arranged to capture a second three-dimensional (3D) point cloud data of the second subarea, and wherein each point in the second 3D point cloud data is captured by at least two sensors of the second set of sensors;
a first Node Processing Unit communicably coupled to the first set of sensors via a communication network, wherein the first Node Processing Unit is configured to:
   receive the first 3D point cloud data from the first set of sensors;
   process the first 3D point cloud data to create a first tracking data of objects in the first subarea; and
   transmit the first tracking data to a central control unit communicably coupled to the first Node Processing Unit;
a second Node Processing Unit communicably coupled to the second set of sensors via a communication network, wherein the second Node Processing Unit is configured to:
   receive the second 3D point cloud data from the second set of sensors;
   process the second 3D point cloud data to create a second tracking data of objects in the second subarea; and
   transmit the second tracking data to the central control unit communicably coupled to the second Node Processing Unit; and
   the central control unit configured to combine the first tracking data and the second tracking data to generate the object tracking data for the operational area.

The present disclosure provides an aforementioned system that generates the object tracking data for the operational area. Herein, the system utilizes the first set of sensors and the second set of sensors (combinedly called the set of sensors, hereinafter) to capture first 3D point cloud data and second 3D point cloud data (combinedly called the 3D point cloud data, herein after). Moreover, the system utilizes the at least two sensors to capture each point of the 3D point cloud data, ensuring comprehensive inclusion of each 3D point data of the 3D point cloud data and defying any possibility of data being missed due to any obstruction or occlusion caused by an environmental factor (for example a fog, rain and/or physical obstructions, such as a parked vehicle, a fallen signboard, or a billboard). Furthermore, the system processes the 3D point cloud data by applying a filtering technique such as, voxel filtering techniques, to reduce noise caused during capture of the 3D point cloud data and align the 3D point cloud data to a common grid for enhanced consistency and accuracy. Furthermore, the point cloud data captured from the set of sensors is merged to form a unified environmental model representing a surrounding captured through the set of sensors. The model is continuously updated in real-time at a frequency, for example 10 Hertz (Hz), ensuring that the system generates accurate and up-to-date object tracking data.

In a second aspect, the present disclosure provides a method for generating an object tracking data for an operational area, the method comprising:
activating a first set of sensors, arranged to monitor a first subarea of the operational area in which a vehicle is present, to capture a first three-dimensional (3D) point cloud data of the first subarea, wherein each point in the first 3D point cloud data is captured by at least two sensors of the first set of sensors;
activating a second set of sensors, arranged to monitor a second subarea of the operational area in which the vehicle is present, to capture a second three-dimensional (3D) point cloud data of the second subarea, wherein each point in the second3D point cloud data is captured by at least two sensors of the second set of sensors;
receiving, by a first Node Processing Unit and a second Node Processing Unit, communicably coupled to the first set of sensors and the second set of sensors, respectively, via a communication network, the 3D point cloud data of the first and second sets of sensors;
processing, by the first Node Processing Unit and the second Node Processing Unit, the 3D point cloud data of the first and second sets of sensors to create a first tracking data of objects in the first subarea and the second tracking data of objects in the second subarea, respectively;
transmitting the first tracking data and the second tracking data to a central control unit communicably coupled to the first Node Processing Unit and the second Node Processing Unit; and
combining, by the central control unit, the first tracking data and the second tracking data to generate the object tracking data for the operational area.

The present disclosure provides an aforementioned method that generates the object tracking data for the operational area. Herein, the method includes activating the first set of sensors and the second set of sensors (combinedly called the set of sensors, hereinafter) to capture first 3D point cloud data and second 3D point cloud data (combinedly called the 3D point cloud data, herein after). Moreover, activating the set of sensors includes activation of the at least two sensors to capture each point of the 3D point cloud data, ensuring comprehensive inclusion of each 3D point data of the 3D point cloud data and defying any possibility of data being missed due to any obstruction or occlusion caused by an environmental factor (for example a fog, rain and/or physical obstructions, such as a parked vehicle, a fallen signboard, or a billboard). Furthermore, the method includes processing the 3D point cloud data by applying a filtering technique, for example, voxel filtering techniques, to reduce a noise caused during capture of the 3D point cloud data and align the 3D point cloud data to a common grid for enhanced consistency and accuracy. Furthermore, the point cloud data captured from the set of sensors is merged to form a unified environmental model representing surrounding captured through the set of sensors. The model is continuously updated in real-time at a frequency, for example 10 Hertz (Hz), ensuring that the method generates accurate and up-to-date object tracking data.

In a third aspect, the present disclosure provides a computer program product comprising a non-transitory machine-readable data storage medium having stored thereon program instructions that, when executed by a processor, cause the processor to execute steps of the method of the second aspect.

Throughout the present disclosure, the term "*object tracking data*" refers to a structured data that represents a real-time or historical movement, position, characteristics of one or more objects within the operational area pr. Typically, the object tracking data is generated by processing sensor inputs to identify and track objects. For example, the object tracking data may be associated with a plurality of objects including a floor, a wall, any physical object (objects that exists in physical world, i.e., a car, a person, a table or the likes) that is utilized to identify the plurality of objects in digital form. The system utilizes data captured from the first set of sensors and the second sets of sensors, to create an accurate and real-time representation of the operational area. The object tracking data is generated based on the processing of the first 3D point cloud data and the second 3D point cloud data processed by the first Node Processing Unit (NPU), and the second NPU associated with the first and the second sets of the sensors, respectively.

Moreover, the object tracking data includes a precise location and a movement information of each object present in the operational area, along with a confidence level assigned to each object based on a number of sensors of the first and the second sets of the sensors capturing and/or detecting each object, ensuring a reliability of the object tracking data, especially in environments with a plurality of dynamic and static objects. The system continuously updates the object tracking data in real-time, ensuring high situational awareness and an accurate representation of the operational area at all times.

Throughout the present disclosure, the term "*operational area*" refers to a defined physical space or a controlled real-world environment within which the object operates. The operational area comprises all regions where the object may travel or navigate and is monitored by the set of sensors. Notably, the operational area encompasses a static object (for example, such as a restricted area, a port, a warehouse, a construction site, a logistic yard, a depot, a factory, a pathway, a barrier, a traffic cone, a parked vehicle and similar), a dynamic object (for example, such as a pedestrian, a moving object, other vehicle, and similar), and the like. The operational area is defined by physical boundaries and is equipped with necessary infrastructure to support for remote driving of a vehicle. Moreover, the operational area may have predefined routes or paths along which the vehicle is expected to travel. Additionally, the operational area may include environmental control units, such as a lighting unit, a weather monitoring unit, and the like, to ensure optimal operating conditions. In this regard, the set of sensors is arranged in a manner that an entirety of the operational area is covered, thereby ensuring a continuous detection and/or tracking of the object present in the operational area.

Throughout the present disclosure, the terms "*first set of sensors*" and "*second set of sensors*" refers to two distinct set of sensors that are strategically positioned to monitor separate subareas of the operational area in which the vehicle is present. For example, the first set of sensors is responsible for capturing the first 3D point cloud data from the first subarea, and the second set of sensors is responsible for capturing the second 3D point cloud data from the second subarea. Furthermore, the first set of sensors and the second set of sensors detects an operation of the vehicle in a real-time.

Optionally, a given sensor from amongst the first set of sensors, or the second set of sensors is implemented as a Light Detection and Ranging (LiDAR) sensor. In this regard, the term "*Light detection and Ranging sensor*" refers to a remote sensing technology that uses laser pulses to measure distances from the objects and generates a high-resolution three-dimensional (3D) point cloud data, allowing for accurate object detection and modeling of the operational area. Examples of the given sensor may include, but are not limited to, radar sensors, ultrasonic sensors, inertial measurement unit sensors, optical sensors and the like. It will be appreciated that the given sensor implemented as the LiDAR sensor enables a real-time monitoring of the dynamic object and the static object present within the operational area. It will also be appreciated that the LiDAR sensor does not rely on ambient light, making the LiDAR sensor effective in various environmental conditions. The LiDAR sensor emits laser pulses and measures a flight time to compute distances and generates the 3D point cloud data of a subarea within the operational area. A technical effect of the aforementioned feature is to ensure that high spatial resolution of the LiDAR sensor enables precise identification of obstacles, reducing false positives. Additionally, the LiDAR sensor ensures real-time situational awareness, leading to fewer accidents, better route planning, and optimized vehicular movement.

Moreover, both the first and the second sets of sensors are designed to work in tandem, with each data point in the captured first 3D point cloud data and the second 3D point cloud data is being detected by at least two sensors. For instance, the LiDAR sensor from the first set of sensors captures a data point in the operational area and the same data point is also captured by a second LiDAR sensor, ensuring that data associated with the point is accurate and reliable. Optionally, the second LiDAR sensor is either from the first set of sensors or the second set of sensors. Moreover, the first set of sensors and the second set of sensors provide a comprehensive spatial coverage of the operational area, enabling the system to generate the object tracking data in an accurate and synchronized manner.

In this regard, the first set of sensors and the second set of sensors may be installed in an infrastructure within the operational area for examples such as walls, ceilings, boundaries, and similar. Optionally, one or more scaffolding structures may be used for mounting the set of sensors at sufficient height in outdoor, when there is no suitable equipment or place within the operational area for deploying. Optionally, layout (such as height, placement, and overall number) of the first set of sensors and the second set of sensors may be dependent on multiple factors such as area size, controlled vehicle size, other moving object size, minimum detectable object size requirement, redundancy requirements, or similar. Optionally, the set of sensors uses a gigabit ethernet and 230V(volt) mains power for communicating with the communication network. It will be appreciated that the arrangement of the set of sensors to cover an entirety of the operational area ensures an uninterrupted real-time detection and tracking of the objects. It will also be appreciated that defining physical boundaries and restricting access to the system creates a controlled environment. This minimizes the likelihood of unexpected interference and ensures safe and reliable operation.

Throughout the present disclosure, the term "*first subarea*" and the "*second subarea*" refer to distinct regions or portions of the operational area, covered by the first set of sensors and the second set of sensors, respectively, in which the vehicle can operate. The first subarea and the second subarea of the operational area are monitored by the first set of sensors and second set of sensors, respectively. For example, the first subarea may represent a region of the operational area where the vehicle initially enters, such as a specific section of a parking lot, an entryway, or a designated lane within a building. In this scenario, the first set of sensors capture the first 3D point cloud data from the first subarea, monitors a position of the vehicle and detects any objects or obstacles present within the first subarea, while the vehicle is present within the first subarea. Once the vehicle moves to a new location, the vehicle may enter the second subarea, which is another region of the operational area that is monitored by the second set of sensors. In this scenario, the second set of sensors capture the second 3D point cloud data from the second subarea. Herein, each point in the second 3D point cloud data is captured by the at least two sensors of the second set of sensors.

The first subarea and the second subarea are thus spatially defined regions within the operational area that change dynamically as the vehicle moves therethrough. The first set of sensors and the second set of sensors are responsible for monitoring the vehicle's passage and activities in the first subarea and the second subarea, respectively, ensuring that no part of the operational area is left unmonitored during movement of the vehicle. The system utilises the data captured from both the first set of sensors and the second set of sensors to create a real-time, comprehensive environmental model, which tracks the position of the vehicle and the surrounding objects as the vehicle transitions between the first subarea and the second subarea. This division of the operational area into the first subarea and the second subarea enables the system to maintain continuous tracking of the vehicle, regardless of the position in the overall space. By using fixed sensors that monitor given subareas, the system ensures a highly detailed and reliable tracking of the vehicle's movement, providing necessary data for accurate object detection, tracking, and situational awareness as the vehicle progresses through different parts of the operational area.

Throughout the present disclosure, the term "*Node Processing Unit*" refers to a computational processing unit that is communicably coupled to a set of sensors within a given subarea of the operational area. Notably, the Node Processing Unit (NPU) is responsible to receiving, processing and transmitting sensor data to the central control unit. Throughout the present disclosure, the term "*communication network*" refers to a wired or a wireless data transmission network that enables seamless communication between given Node Processing Unit (NPU) and the set of sensors. In this regard, the first NPU and the second NPU is coupled to the first set of sensors and the second set of sensors, respectively, through a wired network (e.g., an ethernet, a fiber optic connection, an industrial fieldbus protocol and the like), a wireless network (e.g., Wi-Fi, 4G/5G/6G, Li-Fi, mmWave, Radio Frequency communication protocol and the like) and a hybrid network (a combination of wired and wireless technologies). In this regard, the first Node Processing Unit receives the first 3D point cloud data captured by the first set of sensors monitoring the first subarea.

The term "*tracking data*" refers to an information generated by processing the 3D point cloud data by the set of sensors that provides positional and movement details of the objects, the vehicle, and the like, within the operational area. The tracking data may include, but are not limited to, a real-time location of the object, a velocity of the object, an acceleration of the object, a trajectory of the object, an object classification, an object coordinates, a size and shape information and other dynamic elements, such as obstacles, moving objects, environmental features, and similar. The first set of sensors transmit the first 3D point cloud data to the first NPU over the communication network. The first NPU processes the received first 3D point cloud data to generate first tracking data representing the position, movement, and classification of objects in the first subarea of the operational area. Similarly, the second NPU receives the second 3D point cloud data from the second set of sensors that monitors the second subarea of the operational area. The second NPU processes the second 3D point cloud data to generate the second tracking data representing a position, a movement, and a classification of the objects in the second subarea of the operational area. The processing may include a filtering, a segmentation, a feature extraction, an object tracking algorithms to convert a raw first 3D point cloud data into a meaningful object tracking information. Moreover, by processing the first 3D point cloud data locally before transmitting the first tracking data to the central control unit, the first NPU minimizes data load on the communication network. Furthermore, localized processing enables faster detection of objects and dynamic obstacles, leading to improved operational efficiency. Similarly, by processing the second 3D point cloud data locally before transmitting the second tracking data to the central control unit, the second NPU minimizes data load on the communication network.

It will be appreciated that the system distributes computational tasks across multiple Node Processing Units to improve an efficiency and a real-time performance. It will also be appreciated that by processing the 3D point cloud data locally, only refined tracking data is transmitted to the central control unit, reducing network congestion and bandwidth usage. Moreover, decentralized processing at said NPUs reduces a time required for object detection and tracking that enhances system responsiveness.

Throughout the present disclosure the term "*central control unit*" refers to a central control module that manages an interaction between the vehicle, the first set of sensors and the second set of sensors, the first Node Processing Unit and the second Node Processing Unit (NPU). The control unit is configured to process the first tracking data and the second tracking data received from the first NPU and the second NPU, respectively, to further combine the first tracking data and the second tracking data to generate the object tracking data for the operational area. The control unit performs tasks for example, such as navigation, collision avoidance, trajectory planning, and similar, by processing real-time data and implementing control commands. The control unit is communicably coupled to the first NPU and the second NPU, and the vehicle, via the communication network (for example, such as a cellular network, a Wi-Fi network, a satellite network, and similar).

The tracking data is essential for creating an accurate digital twin of the operational area, enabling the control unit to process and analyze information for decision-making, route optimization, and safety mechanisms. The tracking data is communicated to the central control unit via the communication network for further processing and integration into the system's operation. Based on the tracking data, the one or more 3D models of the layout of the operational area, such as geometry of roads, intersections, buildings, and similar are generated. It will be appreciated that integration of the tracking data into creation of the one or more 3D models enhances ability of the system to maintain an accurate and up-to-date virtual representation of the operational area, thereby supporting real-time decision-making and route optimization. It will also be appreciated that continuous update of the digital twin with the tracking data ensures that the system can adapt to changes in the operational area, thereby facilitating dynamic and safe navigation for the vehicle. Furthermore, it will be appreciated that by using the 3D model of the operational area within the digital twin, the system can improve its spatial awareness and object detection capabilities, leading to a more precise control and better safety measures for operations of the vehicle in complex or constrained environments.

Optionally, the first Node Processing Unit is further configured to validate each point in the first 3D point cloud data by comparing each point originating from at least two sensors from the first set of sensors; and the second Node Processing Unit is further configured to validate each point in the second 3D point cloud data by comparing each point originating from at least two sensors from the second set of sensors.

In this regard, the term "*validating*" refers to a process of confirming accuracy and reliability of each data point of the 3D point cloud data by cross-referencing each point to the at least two sensors from the first set of sensors and/or the second set sensors. Notably, each point in the 3D point cloud data is cross-checked by cross-referencing to ensure consistency, with each point that is detected by the at least two sensors being considered more reliable than those detected by a single sensor of the first set of sensors and/or the second set of the sensors. Each NPU compares coordinates of each data point of the 3D point cloud data captured by the at least two sensors. If the coordinates match within an acceptable margin of error, the data point is considered valid and retained. If a data point has a significant deviation or only appears in one sensor's data, it may be considered anomaly or noise and discarded. Based on the validation, the system ensures higher accuracy and reliability of the 3D point cloud data, effectively eliminating errors due to a misalignment in the at least two sensors or a faulty data capture, thus improving the overall quality of the object tracking data. A clean and validated 3D point cloud data is used to generate the tracking data for the objects in the subarea. A technical effect of the aforementioned feature is to reduce noise and false detection that ensures improved precision in 3D spatial mapping. Additionally, it ensures that detected objects are based on real-world positions, reducing misclassifications.

Optionally, the present disclosure provides that the first and second Node Processing Units validate each point in the 3D point cloud data by comparing sensor readings from at least two sensors. This process ensures comprehensive inclusion of each 3D point, eliminating potential gaps in detection caused by environmental factors such as fog, rain, or occlusions (e.g., a parked vehicle, a fallen signboard, or a billboard). By cross-referencing sensor inputs, the system significantly reduces false positives and ensures accurate object tracking in dynamic environments.

Optionally, the first Node Processing Unit and the second Node Processing Unit are further configured to:
classify objects as at least one dynamic object or at least one static object present within the first subarea and the second subarea, respectively; and
assign a confidence level to each of the at least one dynamic object and the at least one static object, based on number of sensors from amongst the first set of sensors and the second set of sensors, respectively, capturing each point corresponding to each of the at least one dynamic object or the at least one static object.

Optionally, the present disclosure provides that the first and second Node Processing Units classify detected objects as either dynamic or static based on their motion characteristics. Classification is determined by tracking changes in position across successive frames of 3D point cloud data. Additionally, a confidence level is assigned to each detected object based on the number of sensors capturing its position, ensuring higher reliability in tracking.

The technical effect of this classification process is that it enables the system to efficiently prioritize tracking of moving objects while reducing computational overhead related to static objects. This optimization improves real-time responsiveness in autonomous navigation systems by allowing the system to dynamically adapt to environmental changes and focus processing power on relevant moving entities.

In this regard, the term "*dynamic object*" refers to an object within the first subarea and the second subarea that exhibit motion or positional change over time. The dynamic objects have a non-stationary nature, meaning the dynamic objects change their position, orientation, or velocity within said subarea. In this regard, the term "*static object*" refers to an object within the first subarea and the second subarea that remains stationary over time and fails to exhibit any signification motion. This classification is essential for differentiating between moving and stationary obstacles, which is further required for real-time navigation and collision avoidance. Furthermore, to enhance the accuracy of this classification, the first NPU and second NPU are also configured to assign a confidence level to each object, based on a number of sensors from the first set of sensors and the second set of sensors that capture the point corresponding to each object. The higher the number of sensors that detect the point corresponding to each object, higher the confidence level assigned to the point. This approach ensures that objects detected by at least two sensors are more reliably classified and tracked, reducing the chances of false identification or missed objects. Thus, this approach significantly improves the accuracy and reliability of the object tracking system, ensuring that the system can effectively distinguish between the dynamic and static objects, even in environments with high sensor noise or partial occlusions. Moreover, by assigning the confidence level based on sensor input, the system can prioritize object tracking, leading to more informed decision-making and safer vehicle operation. Moreover, the classification of the objects in the dynamic objects and the static objects and confidence-level assignment enables the system to adaptively respond to dynamic environments, enhancing situational awareness and real-time object tracking capabilities. It will be appreciated that it results in improved vehicle navigation, more effective collision avoidance, and an overall increase in the safety and efficiency of autonomous systems. A technical effect of the aforementioned feature is to accurately differentiate between the dynamic objects and the static objects present within the operational area. Additionally, by prioritizing objects with high-confidence level, computational resources are efficiently utilized, improving real-time processing.

Optionally, the at least one static object is any one of: a wall, a parked vehicle, a barrier, a pothole, an equipment. In this regard, the term "*wall*" refers to a fixed, vertical structure that serves as a physical boundary within the operational area. For example, building walls, warehouse partitions, fencing panels with solid surfaces and the like. It is a static object that does not change position over time and may be detected by the first NPU and second NPU based on given 3D point cloud data. It will be appreciated that the walls must be accurately classified to prevent the collisions and aid in safe navigation for autonomous vehicles. In this regard, the parked vehicle is a stationary vehicle that remains idle within the operational area for a given time period. For example, forklifts or industrial vehicles stationed in a warehouse and the like. The term "*barrier*" refers to any physical obstruction placed within the operational area to restrict or guide movement. The barrier is static in nature and does not change its position over time. For example, concrete dividers, or guardrails on roads, temporary roadblocks, safety barricades in industrial zones and the like. In terms of the static objects, the pothole is a surface depression or a cavity on ground that can affect the vehicle movement and stability. For example, cracks or depressions in asphalt roads, erosion holes in off-road terrain and the like. The term "*equipment*" refers to a stationary machinery, a tool or an operational device present within the operational area. For example, manufacturing machines in the warehouse, fixed conveyor belts, robotic arm and the like. A technical effect of the aforementioned feature is to ensure that stationary obstacles are identified and processed correctly. Additionally, it contributes to real-time understanding of the static objects present in the operational area, enabling improved path planning and reliable autonomous navigation in industrial and urban environments.

Optionally, the at least one dynamic object is any one of: a moving vehicle, a pedestrian, an animal. In this regard, at least one of: the moving vehicle, the pedestrian, the animal is actively navigating through the operational area. The system assigns an object type (such as the moving vehicle, the pedestrian, the animal) based on a size, a movement characteristic, a sensor fusion technique and the like. A technical effect of the aforementioned feature is to facilitate the system to predict and avoid potential collisions of the vehicle with the dynamic objects and enables real-time path adjustments based on the movement of the dynamic objects.

Optionally, at least one of the first Node Processing Unit and the second Node Processing Unit is further configured to:
detect and track the at least one dynamic object and/or the at least one static object from amongst the objects present within the first subarea and/or the second subarea, respectively, with respect to a position of the vehicle;
analyze at least one of: a position, a speed, a direction of motion, and a path of the at least one dynamic object, and a position and a size of the at least one dynamic object, to predict a potential collision between the vehicle and the at least one dynamic object and/or at least one static object in the first subarea and/or the second subarea; and
transmit tracking data to the central control unit to adjust the at least one vehicle parameter of the vehicle to prevent the collision between the vehicle and the at least one dynamic object and/or at least one static object.

Optionally, the present disclosure provides that at least one of the first and second Node Processing Units detects and tracks both dynamic and static objects in the operational area relative to the vehicle's position. The system analyzes object attributes, including position, velocity, and trajectory, to predict potential collisions. Based on this analysis, the system transmits tracking data to the central control unit, which adjusts at least one vehicle parameter, such as speed, braking force, or steering angle, to prevent a collision. For example, if a pedestrian is detected within 5 meters of the vehicle's predicted path, the system may reduce the vehicle's speed by 50% and trigger an alert for immediate braking. The technical effect of this feature is enhanced safety in dynamic environments where real-time decision-making is essential for collision avoidance. By continuously updating the vehicle's movement strategy, the system ensures that obstacles are detected and responded to efficiently, minimizing risks in real-world operations.

In this regard, the phrase "*position of the vehicle*" refers to a real-time spatial coordinate of the vehicle within the operational area. The at least one of the first NPU and the second NPU receives the 3D point cloud data from the first set of sensors and the second set of sensors, respectively, to detect and track the at least one dynamic object and/or the at least one static object from amongst the objects present within the first subarea and/or the second subarea, respectively. For the at least one dynamic object, the at least one of the first NPU and the second NPU analyzes the position, the speed, the direction of motion, and the path of the at least one dynamic object to predict the likelihood of a collision between the vehicle and to predict the potential collision between the vehicle and the at least one dynamic object and/or at least one static object in the first subarea and/or the second subarea. For example, if a pedestrian (as the at least one dynamic object) is detected moving towards the vehicle in the first subarea, the at least one of the first NPU and the second NPU evaluates the pedestrian's speed and trajectory. This data is then used to predict whether the pedestrian will cross the vehicle's path and calculate the potential for collision. Similarly, the at least one of the first NPU and the second NPU tracks the speed and movement of vehicles in adjacent lanes to assess whether they may drift into the vehicle's path, even if they are in the second subarea. Furthermore, the at least one of the first NPU and the second NPU also assesses the position and size of the at least one static object. For instance, if the parked car is detected in the second subarea and identified as an obstacle in the vehicle's path, the at least one of the first NPU and the second NPU evaluates the vehicle's proximity to that object to ensure safe navigation. The central control unit uses this information to continuously update the vehicle's navigation strategy, ensuring that the vehicle adjusts its movement accordingly to avoid any potential collisions.

Once the analysis is complete, the tracking data is transmitted to the central control unit, which uses this data to adjust the vehicle's parameters in real time. In this regard, the term "*vehicle parameter*" refers to various adjustable or controllable characteristics of the vehicle's operation that can be modified in real time to enhance safety and performance. The at least one vehicle parameter may include, but are not limited to, a vehicle's speed, a steering angle, a braking force, an acceleration, and a throttle input. Each of the at least one vehicle parameter plays a critical role in determining responsiveness and maneuverability of the vehicle at a time of encountering the at least one dynamic object and/or the at least one static object within the operational area. For example, when a dynamic object, such as the pedestrian or another vehicle, is detected in proximity to the vehicle and a potential collision is predicted, the central control unit may automatically adjust the speed of the vehicle by reducing it to avoid impact. The steering angle may also be modified to steer the vehicle away from a predicted collision path, enabling the vehicle to navigate safely around obstacles. In scenarios where the dynamic object and/or the static object is directly in the vehicle's trajectory, the braking force can be applied to decelerate or stop the vehicle, effectively preventing or mitigating the collision. The system may also adjust acceleration levels, ensuring that the vehicle's movement is in harmony with the surrounding environment, especially when the vehicle is navigating tight spaces or complex traffic conditions.

For instance, if a vehicle is approaching a sharp turn or a bottleneck in the operational area, the central control unit may increase braking force to slow the vehicle in preparation for the turn, while simultaneously adjusting the steering angle to ensure optimal path alignment. Alternatively, if the vehicle detects the at least one static object, such as the wall or the parked car, in its path, the central control unit may reduce the speed to a minimum or direct the vehicle to follow an alternative route to avoid a collision. These adjustments to the vehicle parameters are done in real-time, based on the tracking data generated by the at least one of the first NPU and the second NPU and the analysis of the position, the speed, the direction of motion, and the trajectory of the at least one dynamic object and/or the at least one static object. It will be appreciated that by continually modifying the vehicle's parameters in response to the changing environment, the central control unit ensures the vehicle operates efficiently while maintaining safety, responsiveness, and adaptive capability to navigate complex and unpredictable scenarios. A technical effect of the aforementioned feature is that the central control unit enables the vehicle to autonomously and dynamically adjust its navigation parameters in response to real-time environmental conditions, thereby improving collision avoidance, safety, and overall operational efficiency. This results in a more responsive and adaptive autonomous vehicle system that can proactively mitigate risks posed by the at least dynamic object and/or the at least one static object.

Optionally, the speed of the vehicle is decreased, based on at least one of: the size of the safety zone, a speed of the at least one dynamic object, a position of the at least one dynamic object and/or the at least one static object. In this regard, the term "*safety zone*" refers to a predefined area surrounding the vehicle that is designated to ensure safe operation and collision avoidance. Notably, the safety zone encompasses a critical safety zone and a buffer safety zone (described later). The safety zone allows the vehicle to operate safely without risking collisions with the object. In this regard, once the vehicle is in motion, the control unit is configured to determine the safety zone that surrounds the vehicle, based on the at least one vehicle parameter for example, such as its speed, acceleration, dimensions, trajectory, and similar. This safety zone is a virtual perimeter that adapts in real-time, expanding or contracting according to current operational state of the vehicle and in proximity to other objects or obstacles in the operational area. In an example, consider a vehicle operating within the operational area with a current speed of 10 meters per second (m/s). The set of sensors installed in the operational area may detect dimensions of the vehicle (i.e., 4 meters long, 2 meters wide) and a trajectory (i.e., a straight path heading west). Simultaneously, the set of sensors may identify the dynamic object (e.g., a pedestrian) 15 meters ahead of the vehicle along its trajectory. In this regard, the central control unit processes said parameters of the vehicle, such as its speed, acceleration, dimensions, and trajectory, along with real-time 3D point cloud data collected from the set of sensors. Based on the vehicle's current speed and its estimated stopping distance, the central control unit may calculate a minimum safe distance in front of the vehicle. Similarly, the vehicle's width and trajectory are used to define lateral boundaries, ensuring sufficient clearance on either side. Using this information, the control unit may create a virtual safety zone around the vehicle, wherein the safety zone may extend 12 meters ahead of the vehicle, with an additional lateral margin of 1 meter on each side, accounting for potential trajectory deviations. As the pedestrian is detected within calculated safety zone, the central control unit may initiate commands to slow the vehicle, stop it, or adjust its trajectory to avoid the obstacle, ensuring safe operation without collisions. A technical effect of the aforementioned feature is to prevent accidents by dynamically adapting the vehicle speed to environmental conditions. It ensures smoother driving experiences by implementing gradual speed adjustments instead of abrupt stops.

Optionally, the first Node Processing Unit and the second Node Processing Unit are further configured to filter the first 3D point cloud data and the second 3D point cloud data, respectively, by using a filtering algorithm, and wherein the filtering involves voxelization of the first 3D point cloud data and the second 3D point cloud data, and separation of static points from dynamic points that are detected based on the voxelization.

In this regard, the term "*filtering algorithm*" refers to a computational process used to process and refine the 3D point cloud data captured by the set of sensors, ensuring that each point data is accurate and useful for object tracking and analysis. It will be appreciated that the filtering algorithm is used by the first Node Processing Unit (NPU) and the second NPU to reduce noise in the 3D point cloud data by eliminating irrelevant or erroneous points. The term "*voxelization*" refers to a process of converting the first 3D point cloud data and the second 3D point cloud data into a structured grid representation composed of small, discrete volumetric elements called voxels (such as 3D pixels or cubic elements). Notably, each voxel represents a collection of points. It will be appreciated that the voxelization is used to partition the 3D point cloud data into uniform volumetric grids that enables efficient processing of the first 3D point cloud data and the second 3D point cloud data. Moreover, the voxelization is used to identify and differentiate the static points from the dynamic points by comparing voxel states across successive frames of the volumetric grids. For example, if a voxel remains unchanged across multiple frames, it is classified as static and if the voxel exhibits movement or change in position, it is classified as dynamic. It will be appreciated that by classifying points into the static points and the dynamic points, the first NPU and the second NPU is able to better track the dynamic objects while ignoring the static objects. It will also be appreciated that the voxelization reduces volume of data, making real-time processing efficient for autonomous navigation and collision prevention. A technical effect of the aforementioned feature is to ensure that the first NPU and the second NPU is able to accurately detect and classify obstacles within the operational area, improving situational awareness. Additionally, by filtering and voxelizing the 3D point cloud data, the NPU minimizes the computational complexity while ensuring efficient data handling.

Optionally, the voxelization of the first 3D point cloud data and the second 3D point cloud data comprises:
converting the first 3D point cloud data and the second 3D point cloud data into a voxel grid, wherein the voxel grid represents a three-dimensional space; and
downsampling the voxel grid by reducing resolution around a static object and by maintaining higher resolution around a dynamic object.

In this regard, the term "*voxel grid*" refers to a three-dimensional (3D) spatial representation of the first point cloud data and the second point cloud data. The voxel grid divides the operational area into small, cube-like units, or voxels, that represent specific spatial regions. This process simplifies the complex 3D point cloud data into a more structured format, making it easier for the first NPU and the second NPU to perform real-time analysis and tracking. The voxelization is particularly useful in reducing the amount of data the system needs to process, as it eliminates redundant points and groups them into more manageable clusters. The term "*downsampling*" refers to a process of reducing resolution of the voxel grid to optimize computational efficiency while preserving relevant details. Notably, the downsampling is performed by reducing the resolution around the static objects (e.g., the wall, the parked vehicle and the like) by merging multiple points into fewer voxels, since the static objects do not change over time. Moreover, the downsampling is done by maintaining higher resolution around the dynamic objects (e.g., the moving vehicle, the pedestrian and the like) by retaining finer voxel details to improve tracking accuracy. The static objects do not change their position over time and are less critical for real-time tracking and collision prediction. Therefore, the resolution in these areas is reduced, lowering the level of detail without losing any significant information. On the other hand, the dynamic objects require high-resolution data to track their movements accurately. By maintaining higher resolution around the dynamic objects, the NPU can capture detailed and timely information about the position, the speed, and the trajectory, associated with the dynamic objects which are essential for predicting potential collisions and adjusting the vehicle's parameters accordingly. A technical effect of the aforementioned feature is to optimize memory usage by reducing unnecessary data storage for the static objects. Additionally, it enhances accuracy in detecting and tracking the dynamic objects, ensuring that the dynamic objects are monitored with high precision.

Following the voxelization process, the filtering algorithm separates static points from dynamic points. The static points are typically not of immediate concern for the movement of the vehicle, as they do not pose a dynamic hazard. On the other hand, dynamic points represent objects that are in motion. These dynamic points are crucial for predicting potential collisions and adjusting the vehicle's behavior in the real-time.

For example, in a scenario where the vehicle is navigating through a parking lot, the filtering algorithm may first voxelize the 3D point cloud data captured by the first set of sensors and the second set of sensors. After voxelization, the first NPU and the second NPU may be able to differentiate between a static point associated with the static objects, like the walls and the parked cars, and a dynamic point associated with the dynamic objects, such as the pedestrian walking through the lot or the another moving vehicle. By separating the static point and the dynamic point, the first NPU and the second NPU may be able to track the dynamic objects, which are more relevant for ensuring safe navigation than the static objects (for example, the dynamic objects keep on changing position), while diminishing the static objects continuous detection.

Furthermore, the filtering algorithm significantly reduces the computational load by removing unnecessary data points, allowing the system to focus on real-time object detection and tracking. Additionally, by accurately distinguishing between static and dynamic points, the system ensures that the vehicle's behavior is responsive to the actual threats in the operational area, such as moving obstacles, while minimizing unnecessary adjustments for immovable objects. This method enhances the overall efficiency and safety of the system by ensuring timely and appropriate responses to dynamic elements in the operational area.

Optionally, the filtering algorithm comprises at least one of: a template matching filter, a Kalman filter. In an embodiment, the filtering algorithm may include the template matching filter. The template matching filter works by comparing the 3D point cloud data to predefined templates of known object shapes and configurations. The template matching filter helps to identify and confirm objects within the operational area by matching the observed 3D point cloud data to the predefined templates, such as vehicle shapes, pedestrian patterns, or other objects of interest. The template matching filter improves an accuracy of object detection by eliminating irrelevant points and reducing noise, ensuring that only valid objects are considered in the tracking data. For example, when the system detects a set of points that correspond to a vehicle's dimensions, the template matching filter confirms the object as the dynamic object or the static object based on its predefined template, thus enhancing the classification process and tracking reliability.

In another embodiment, the filtering algorithm may be the Kalman filter, which is a recursive filter used to estimate the state of dynamic objects over time. The Kalman filter combines current sensor measurements (for e.g., the 3D point cloud data) with a prediction model based on the object's motion, providing an accurate estimate of the object's position and velocity. The Kalman filter is especially useful for tracking the dynamic objects such as the vehicles or the pedestrians, even in scenarios where the object might be temporarily occluded or when sensor data is incomplete or noisy. For example, in case of a moving vehicle that may be partially blocked by another object, the Kalman filter predicts the vehicle's most likely trajectory and location, ensuring continuous and smooth tracking without significant disruption. This enables the first NPU and the second NPU to reliably follow dynamic objects and update the positions of the objects in real-time, even in challenging conditions where the sensor data may be intermittent or unclear. It will be appreciated that the Kalman filter forecast a next possible state of the object based on its prior motion and system dynamics. It adjusts the predicted state by incorporating new sensor measurements, reducing uncertainty and filtering noise.

A technical effect of the aforementioned feature is to enhance object detection and classification by reducing false positives and false negatives. Additionally, it facilitates smooth and reliable tracking of the dynamic objects, even in occluded or noisy environments.

Optionally, the digital map is updated in real-time at a frequency range of 5-30 Hz.

Optionally, the present disclosure provides that the object tracking data is updated in real-time at a frequency range of 5-30 Hz. The update rate ensures that tracking information remains current, reducing data lag and enabling more precise localization of dynamic objects.

A higher update frequency improves tracking accuracy, particularly in fast-moving environments where objects change position rapidly. By increasing the update rate, the system enhances the vehicle's ability to react to detected obstacles in real time, improving navigation safety and operational efficiency.

In this regard, the term "*digital map*" refers to a virtual representation of the operational area, which includes data points derived from the 3D point cloud captured by the set of sensors. The digital map provides a detailed, continuously updated model of the operational area, allowing the first NPU and the second NPU to track the location and movement of the plurality of objects within the operational area. The map can include both the static objects, such as walls, vehicles, and other infrastructure, as well as the dynamic objects, such as pedestrians and moving vehicles. It serves as the foundational tool for generating the object tracking data that informs the vehicle's decision-making process.

Optionally, the digital map is updated at the frequency that lies in the range of 5, 6, 7, 8, 10, 12, 14, 16 or 18 Hz up to 6, 7, 8, 10, 12, 14, 16, 18, 20 or 30 Hz. A technical effect of updating the digital map in real-time at the frequency in the range of 5-30 Hz is to ensure that frequent updates reduce data lag, ensuring precise localization of the dynamic objects. A higher update rate improves precision and reaction time of the vehicle to the obstacles.

In an embodiment, the digital map is updated in real-time at a frequency range of 5-30 Hertz (Hz). The updating in real-time ensures that the system maintains an up-to-date representation of the operational area, accommodating changes in the operational area as they occur. In addition to that, the higher an update frequency (frequency at which the digital map is updated), the more accurate and timelier the data presented in the digital map will be, which is crucial for applications such as autonomous vehicles, where fast response times are necessary to avoid collisions or other safety risks. For example, at a frequency of 10 Hz, the system may refresh the digital map every 100 milliseconds (ms), incorporating data associated with the first and the second sets of sensors and further adjusting for the movement of the dynamic objects and the position of the static objects. The frequency allows the system to effectively track objects, such as the pedestrian walking across the operational area and/or the vehicle making a turn, with minimal delay. By continuously updating the map in real time, the system ensures that the object tracking data remains accurate, allowing the vehicle to make informed decisions and react quickly to potential hazards. In another scenario, at a frequency of 30 Hz, the system may process and update the digital map even more rapidly (than in 10 Hz frequency), further enhancing the responsiveness of the tracking and control system, particularly in fast-moving environments. The ability to update the digital map at a frequency between 5 and 30 Hz provides a balance between computational efficiency and real-time accuracy, ensuring that the system is both resource-efficient and effective in tracking and managing the operational area.

Optionally, the first Node Processing Unit and the second Node Processing Unit are further configured to generate a corresponding object list, wherein the object list indicates at least one of: a classification, a location, and a movement of each object present in the operational area. In this regard, the term "*object list*" refers to a structured data representation that identifies and characterizes various objects (including the dynamic objects and the static objects) detected within the operational area. The object list is generated by the first NPU and the second NPU by processing the first 3D point cloud data and the second 3D point cloud data captured by the respective first set of sensors and the second set of sensors, respectively. The object list provides essential information about each object, including but not limited to the classification, the location, and the movement of each object present in the operation area, thereby enabling effective tracking and management of the objects in the operational area.

Additionally, the first NPU and the second NPU are further configured to generate a corresponding object list. The object list contains data about each object present in the operational area and may include one or more key attributes about the location of each object present in the operational area. For instance, the one or more attributes may be associated with a categorization of the various objects as either dynamic (e.g., moving vehicles, pedestrians, animals) or static (e.g., walls, parked vehicles, barriers). This categorization helps the system to differentiate between the various objects that require real-time tracking and monitoring, such as dynamic objects, and objects that are fixed in place, such as static objects by a change in the location. Further, the one or more key attributes of the object list indicate a precise position of each object within the operational area, which may be derived from the 3D point cloud data processed by the first NPU and the second NPU. The precise position is typically represented in a three-dimensional coordinate system that reflects the spatial arrangement of the various objects in the operational area, further allowing the central control unit to maintain an accurate understanding of a layout of the operational area.

Additionally, the movement of the object list may indicate a trajectory, a speed, and a direction of the at least one dynamic object amongst the dynamic objects. By analyzing the movement of the dynamic objects, the central control unit may predict potential future positions of the dynamic objects and adjust the path of the vehicle accordingly to avoid collisions or other hazards. For example, if the object list identifies a pedestrian moving towards the vehicle's path, the central control unit can adjust the vehicle's trajectory to avoid the pedestrian.

In another example, when a vehicle is operating in the operational area, the first NPU and the second NPUs generate the object list, which might indicate that a dynamic object, such as a moving car, is located 10 meters ahead and moving at a speed of 15 km/h. In contrast, a static object, such as a parked car, might be identified as stationary at a specific location, such as 5 meters to the right of the vehicle. A technical effect of the object list is to enable the central control unit to make real-time decisions, ensuring safe and efficient operation of the vehicle within the operational area.

Optionally, the system is powered by a distributed power network. In this regard, the term "*distributed power network*" refers to an architecture for power distribution that ensures a power is supplied to various components of the system through a network of interconnected power sources rather than relying on a centralized power source. The system architecture for power distribution ensures that all components of the system, including the first set of sensors and the second set of sensors, the Node Processing Units, and the central control unit receive the necessary power to operate efficiently and continuously.

Additionally, the system is powered by the distributed power network, which enables decentralized and flexible power management across the various components of the system. The distributed power network ensures that power is provided to the first set of sensors, the second set of sensors, the Node Processing Units, and other associated components, with each component being supplied power from a localized source within the network. It will be appreciated that the distributed approach to power distribution improves system resilience by allowing flexibility in power allocation and reducing reliance on a single power source. It also enhances ability of the system to operate continuously without interruptions, ensuring that the first and the second sets of sensors, the first NPU and the second NPU remain active and capable of capturing and processing real-time data from the operational area. A technical effect of the aforementioned feature is to reduce the risk of power failure affecting the system, as failure of one power source or component will not necessarily disrupt the operation of other power sources of the distributed power network. Additionally, it reduces operation risks in mission-critical applications.

The present disclosure also relates to the method as described above. Various embodiments and variants disclosed above, with respect to the aforementioned system, apply mutatis mutandis to the method.

The present disclosure also relates to the computer program product as described above. Various embodiments and variants disclosed above, with respect to the aforementioned system and the aforementioned method, apply mutatis mutandis to the computer program product.

The term "*computer program product*" refers to a software product comprising program instructions that are recorded on the non-transitory machine-readable data storage medium, wherein the software product is executable upon a computing hardware (i.e., the processor) for implementing the aforementioned steps of the method for remote driving of the vehicle.

Examples of the non-transitory machine-readable data storage medium includes, but is not limited to, an electronic storage device, a magnetic storage device, an optical storage device, an electromagnetic storage device, a semiconductor storage device, a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, or any suitable combination thereof

### DETAILED DESCRIPTION OF THE DRAWINGS

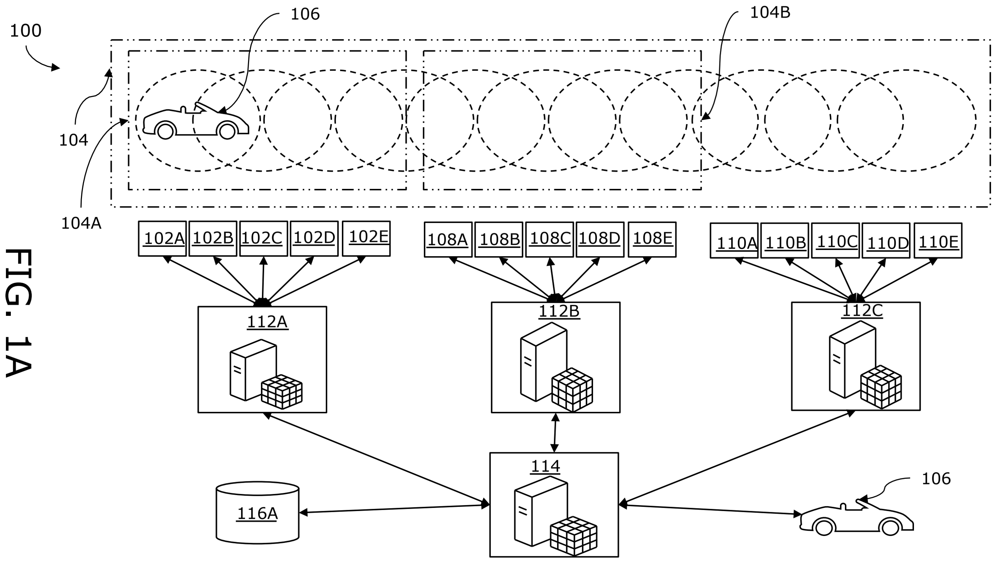

Referring to FIG. 1A-C, illustrated are block diagrams of an architecture of a system **100** for generating an object tracking data for an operational area **104,** in accordance with an embodiment of the present disclosure. As shown in FIG. 1A, the system **100** comprises a first set of sensors (**102A-102E**) monitoring a first subarea **104A** of the operational area **104.** The first set of sensors (**102A-102E**) may capture a first three-dimensional (3D) point cloud data associated with first subarea **104A** in which a vehicle **106** is present. The system **100** further comprises a second sets of sensors (**108A-108E**) monitoring the second subarea **104B** of the operational area **104.** According to one embodiment, the system may also include a third set of sensors (**110A-110E**) associated with a third subarea (not shown in figure) of the operational area **104.** Furthermore, the system **100** comprises a first Node Processing Unit (NPU) **112A,** a second NPU **112B,** and a third NPU **112C.** The first NPU **112A** and the second NPU **112B** are configured to transmit a first tracking data and a second tracking data based on a processing of first 3D point cloud data and a second 3D point cloud data received from the first set of sensors (**102A-102E**) and the second set of sensors (**108A-108E**), respectively to a central control unit **114.** Additionally, the central control unit **114** may be configured to combine the first tracking data and the second tracking data to generate the object tracking data for the operational area **104.** To this end, the object tracking data may be stored in an enterprise resource planning (ERP) database **116A** of a factory enterprise resource planning (ERP) system.

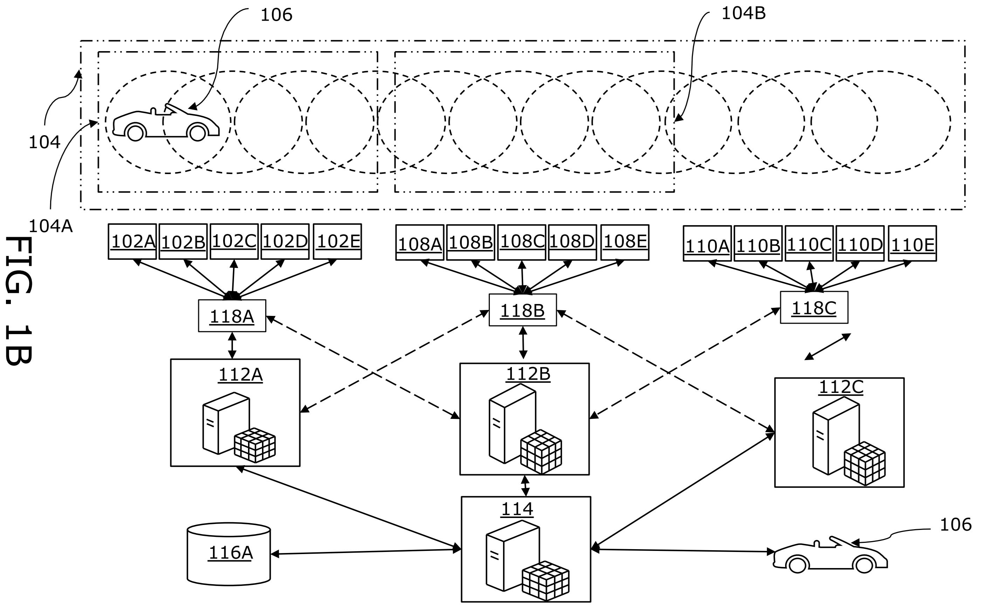

Referring to the FIG. 1B, the system **100** comprises a first set of switches **118A,** a second set of switches **118B,** and a third set of switches **118C** (collectively referred as, "the switches **118",** hereinafter). In this regard, the switches **118** refers to network devices that are used to establish communication pathways between the first set of sensors (**102A-102E**), the second set of sensors (**108A-108E**) and the third set of sensors (**110A-110E**) and the corresponding first NPU **112A,** the second NPU **112B,** and the third NPU **112C,** respectively. The switches **118** play a crucial role in managing data flow, ensuring that the data from the sensors is effectively transmitted to the NPUs for processing.

In an embodiment, the switches **118** may be 10 gigabits(G) switches, which are capable of handling high-bandwidth data transmission, thereby enabling efficient communication between the first and the second sets sensors and the corresponding the first NPU **112A** and the second NPU **112B.** The 10G switches are configured to support aggregate connections from the sensors, meaning that they can handle data from multiple sensors simultaneously, ensuring that data is quickly and accurately routed to the respective NPUs for further processing.

In another embodiment, the sensors may be connected to the 10G switches via wirelessly and/or wired 1G Ethernet connections. For example, wired connections, such as through Category 5 Enhanced (Cat5e) or Cat6 cables, provide stable and high-speed data transmission between the first set of sensors (**102A-102E**) and the first set of switches **118A** and/or the second set of sensors (**108A-108E**) and the second set of switches **118B.** On the other hand, wireless connections enable more flexibility in sensor placement, allowing the sensors to be distributed across the operational area without the need for extensive cabling. The 1G Ethernet connection offers a reliable and cost-effective means of linking the first and the second sets of sensors to the switches **118,** with the ability to scale as needed depending on requirement of the system **100.**

According to another embodiment, the switches **118** may be connected to the first, second, and third NPUs via a 10G trunk or wirelessly. A 10G trunk is a high-bandwidth communication link that can transmit large volumes of data at a faster rate compared to standard connections. By using 10G trunk connections, the system **100** ensures that the data from the first and the second sets of sensors is transmitted efficiently and at high speeds to the corresponding first NPU **112A** and the second NPU **112B,** allowing the first and the second NPUs to process the data in real-time without delays. Alternatively, wireless connections between the switches **118** and the first, second and the third NPUs can be implemented to provide greater flexibility in system **100** configuration and reduce the need for physical cables, that may be beneficial in environments where physical infrastructure is limited or challenging to implement.

In another embodiment, the system may be configured to support automatic load balancing across the switches **118,** ensuring that data from the first and the second sets of sensors is distributed evenly to the first NPU **112A** and the second NPU **112B** respectively, further helping the system **100** prevent bottlenecks and ensures optimal system performance even under high data throughput conditions.

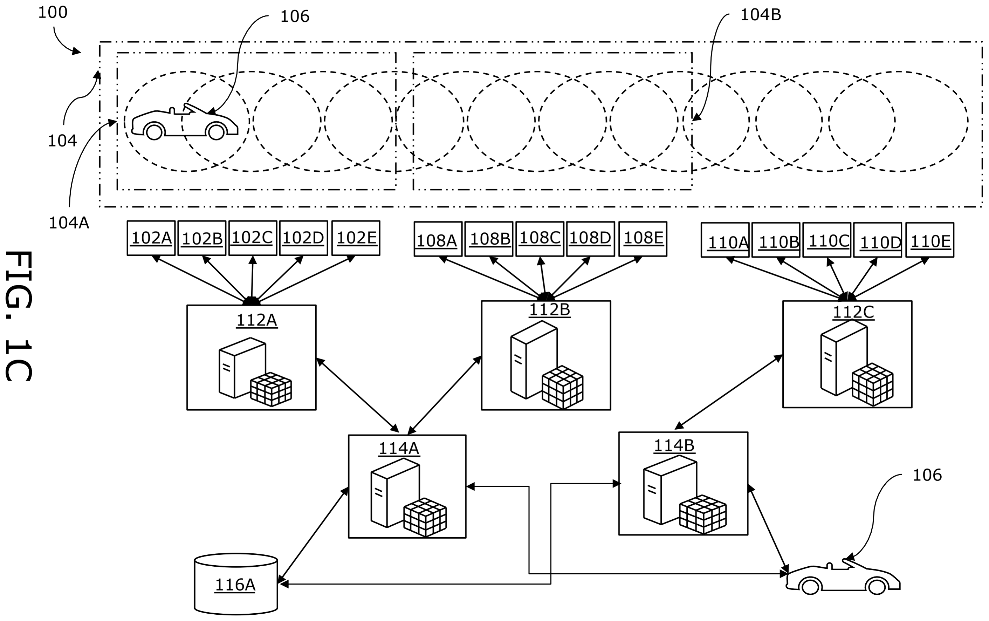

Referring to Fig. 1C, in an embodiment, the system **100** optionally comprises a first central control unit **114A** and a second central control unit **114B.** The first central control unit **114A** is configured to receive the tracking data from the first Node Processing Unit **112A** and the second Node Processing Unit **112B,** as well as process and combine the first tracking data and the second tracking data generated for the first subarea **104A** and the second subarea **104B,** respectively. Similarly, the second central control unit **114B** is configured to receive, process, and combine tracking data from any additional sets of sensors **110A-E** or Node Processing Units (NPUs) **112C** responsible for monitoring additional subareas or regions within the operational area.

In another embodiment, the first central control unit **114A** and the second central control unit **114B** may be coupled together, allowing them to work in coordination, sharing tasks and responsibilities. This coupling can be implemented through a high-bandwidth communication link, ensuring seamless data exchange between the two units. Furthermore, the coupling may be configured in multiple combinations, where, for example, one central control unit **114A** handles specific subareas for the first subarea **104A** and the second subarea **104B** or the first set of sensors **102A-E** and the second set of sensors **108A-E,** while the other central control unit **114B** handles additional areas or performs redundancy and backup functions. Such configurations allow for a flexible and scalable approach to data management and processing within the system **100.**

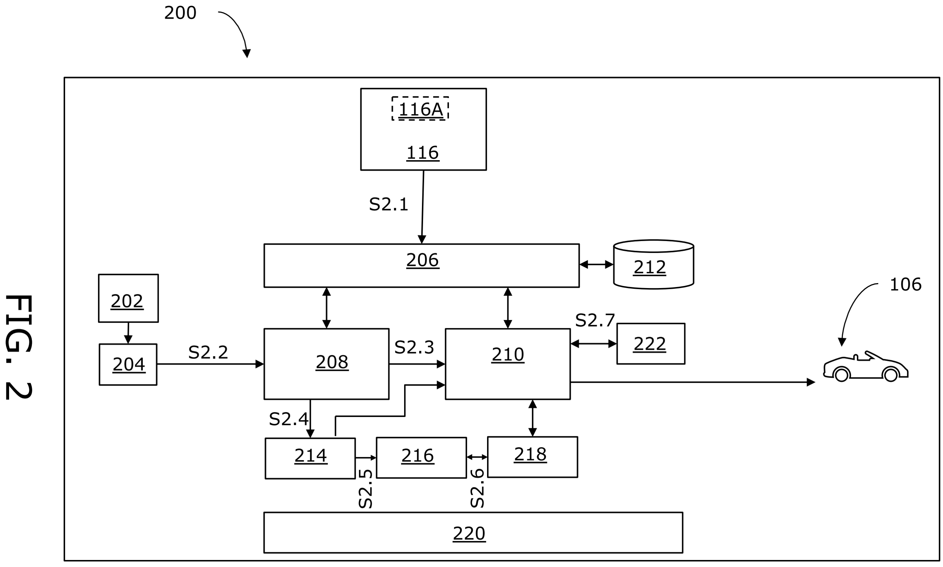

Both the first central control unit **114A** and central control unit **114B** operates independently to handle specific tasks, such as managing the data received from different subareas, ensuring real-time processing of object tracking data, and adjusting the vehicle parameters based on dynamic conditions in the operational area **104,** further providing redundancy, scalability, and fault tolerance within the system **100.** Referring to FIG. 2, illustrated is an exemplary process flow in a system **200** for generating an object tracking data for an operational area, in accordance with an embodiment of the present disclosure. Herein, the system **200** is shown to comprise various exemplary modules for generating an object tracking data for an operational area. As shown, at **S2.1,** a factory enterprise resource planning (ERP) system **116,** which comprises an ERP database **116A,** serves as a source of high-level operational directives for a mission management module **206.** The factory ERP system **116** sends task instructions, resource allocations, route information, and similar, to the mission management module **206.** A mission management module **206** provides real-time status of the operational area **104,** for example, such as occupancy of parking spots and driving areas, as well as a route information which the vehicle **106** should follow, and the like. Herein, the mission management module **206** is communicatively coupled with a mission database **212.** The mission database **212** may comprise predefined route information, to plan a path for the vehicle **106** based on mission requirements.

Herein, the system **200** is communicably coupled to one or more NPU **204** (including at least one of: the first NPU **112A,** the second NPU **112B,** and the third NPU **112C**). The one or more NPU **204** is further communicatively coupled to a plurality of Light Detection and Ranging (LiDAR) sensors **202.** In this regard, the system **200** collects spatial information from the plurality of LiDAR sensors **202.** The plurality of LiDAR sensors may include at least one of: the first set of sensors and the second set of sensors. In this regard, the plurality of LiDAR sensors **202** may be utilized by the system **100** (shown in FIGS. 1A, 1B and 1C) to capture the first and the second 3D point cloud data, which provides detailed three-dimensional spatial information about the operational area. At **S2.2,** the first and the second 3D point cloud data generated by the one or more NPU are transmitted to a perception pipeline module **208.** The perception pipeline module **208** processes raw data, transforms, filters, and subtracts background noise to ensure only relevant points are retained. At **S2.3,** the processed first and the second 3D point cloud data is transmitted to a driving interface module **210.** The perception pipeline module **208** clusters the said data into objects, thereby detects the dynamic and the static objects, and tracks the dynamic and the static objects using techniques such as a Kalman filter, for example. Simultaneously, at **S2.4,** the perception pipeline module **208** uses the data received from the one or more NPU **204** to a localization module **214** to accurately determine the position of the vehicle **106** in the operational area **104.** In this regard, the said position of the vehicle is then sent to a driving interface module **210,** which uses this information to guide the vehicle **106.** At **S2.5,** the vehicle localization module **214** also sends data related to the position of the vehicle **106** to an odometry fusion module **216** to provide precise movement tracking. Herein, the odometry fusion module **216** combines various information relating to the position and a movement of the vehicle **106** to create a more robust and an accurate estimation of the position and the movement of the vehicle **106.**

At **S2.6,** an optimal path for the vehicle **106** is calculated using a path tracking module **218.** In this regard, the data related to the optimal path for the vehicle **106** is transmitted to the driving interface module **210,** which sends control commands to the vehicle **106** to adjust the speed, a steering, a brake, acceleration, and the like of the vehicle **106.** The driving interface module **210** acts as a control bridge between several modules (such as, a mission management module **206,** a path tracking module **218,** a collision avoidance module **222**) and the vehicle **106.** The driving interface module **210** ensures that commands generated from the path tracking module **218,** the collision avoidance module **222,** and the mission management module **206** are accurately executed by the vehicle **106.** At **S2.7,** the collision avoidance module **222** receives data from the perception pipeline module **208** in real-time, thereby analyzes a position of an object (such as, a pedestrian or another vehicle) present in the operational area. Further, based on a detection of the object in the operational area, the collision avoidance module **222** sends said data to the driving interface module **210** which dynamically modifies a route of the vehicle **106** or a speed to prevent any collisions between the vehicle **106** and the objects.

Throughout the process, the system **200** operates in a continuous feedback loop, where real-time data from the plurality of LiDAR sensors **202,** modules, and a status of the vehicle **106** are dynamically updated to adapt to environmental changes and ensure a safe, efficient operation of the vehicle **106** in the operational area.

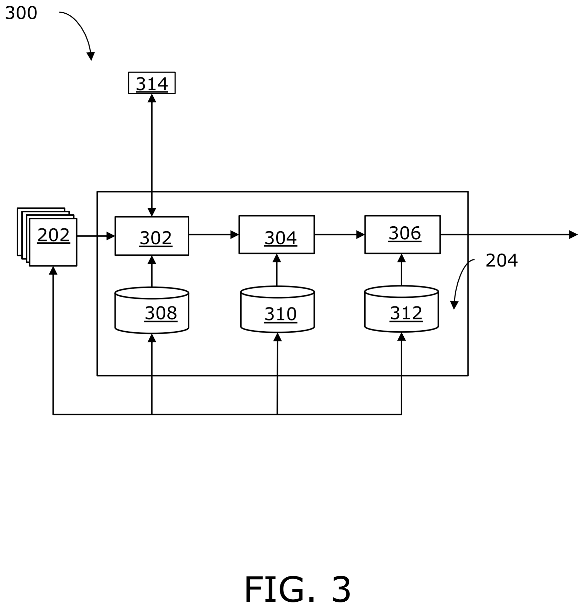

Referring to FIG. 3, illustrated is a block diagram of an architecture **300** of a Node Processing Unit **204** of a system for generating an object tracking data for an operational area, in accordance with an embodiment of the present disclosure. The Node Processing Unit (NPU) **204** is a processing element within the system, responsible for handling and refining data from various sensors, such as plurality of LiDAR sensors **202,** to generate precise object tracking information for an operational area. For example, the NPU **204** may be at least one of the first NPU and the second NPU. The NPU **204** may be implemented as a dedicated processor, a microchip, or an embedded computing system. Further, the NPU **204** may either be located within the system's core hardware or externally, depending on a design and complexity of the system. For instance, the NPU **204** may be housed within an onboard computer or processor in the vehicle. In another embodiment, the NPU **204** may exist as a separate, remote processing unit connected via a network or the communication network. The NPU **204** is configured to perform key functions such as data validation, filtering, and background subtraction, ensuring that only relevant and accurate data is retained for tracking objects in the operation area. For an example, the vehicle **106** may be using the NPU **204** to process real-time data from the first and the second sets of the sensors, enabling tracking of moving pedestrians or other vehicles while ignoring static obstacles or background noise. The flexibility of the NPU's **204** placement allows it to be tailored to the specific needs of the system, whether embedded directly within the operational area or positioned externally.

Furthermore, the NPU **204** comprises a data validation module **302,** a filtering module **304,** a background (BG) filtering module **306.** The data validation module **302** is configured to receive data from the plurality of LiDAR sensors **202** and verify the integrity and accuracy of the incoming data. The data validation module **302** is further configured to identify and remove any erroneous data points, such as outliers or mismeasurements, ensuring that only valid and reliable data is passed to subsequent processing stages. For example, if the data includes points that do not conform to expected environmental patterns, the data validation module **302** is configured to filter out these points to maintain a quality of the data. Furthermore, the validated data is passed to the filtering module **304,** configured to further refine the data by applying specific filtering techniques, such as the voxel filtering. The filtering module **304** is configured to remove irrelevant or extraneous data points that do not correspond to objects of interest in the operational area. For instance, objects located outside the area of interest, such as trees or distant obstacles, are filtered out by the filtering module **304,** ensuring that only the most relevant data is retained for further analysis and object tracking. After processing at the filtering module **304,** it is directed to the background filtering module **306,** which is configured to process the data by incorporating background reference information from the background reference module **312.** The background filtering module **306** is configured to distinguish between the dynamic objects, such as moving vehicles or pedestrians, and static objects in the operational area. This allows the system to identify and track objects that are moving, while ignoring background elements that do not change, such as stationary structures or environmental features. To that end, the system integrity manager **314,** which is configured to monitor the performance and health of the entire data processing pipeline. The system integrity manager **314** is configured to ensure that all modules are functioning correctly, and that the data remains accurate and reliable. If any issues arise during processing, such as inconsistencies in the data or failures within one of the modules of the NPU **204,** the system integrity manager **314** is configured to take corrective actions to maintain the integrity and performance of the system.

In FIG. 3, reference sign **308** denotes static reference in the perception pipeline. Reference sign **310** denotes world coordinates frame to which the validated and filtered LiDAR data are expressed. The static reference **308** provides a baseline for static scene information and supports separating background or other static content from dynamic objects. It supplies the static context used together with background reference information to decide what is background and what is moving. The world coordinates **310** is the global reference frame shown in FIG. 3. The validated and filtered LiDAR point data are expressed in this frame so that downstream modules operate with a common, consistent coordinate system.

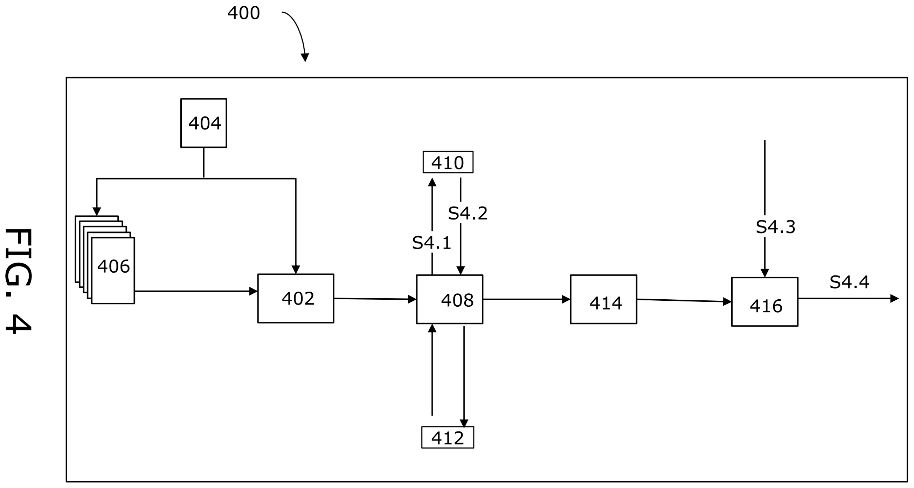

Referring to FIG. 4, illustrated is a block diagram of an architecture of a perception pipeline **400** utilized for a classification of a static and a dynamic object in a system for generating an object tracking data for an operational area, in accordance with an embodiment of the present disclosure. The perception pipeline **400** is a crucial component designed to process, fuse, and analyze data from the first and second sets of sensors, such as LiDAR, to generate real-time object tracking data for the operational area. The perception pipeline **400** comprises a fusion module **402** configured to integrate data from multiple sources, such as the first and the second 3D point cloud data captured by the first and second sets of sensors. This module combines the 3D point cloud data from different sensors to create a unified, coherent representation of the environment, enabling the system to improve the accuracy and completeness of the data. The fusion module ensures that overlapping, redundant, or noisy data points are properly handled, thus providing a cleaner and more accurate output for subsequent processing. A perception configuration service module **404** is configured to handle configuration settings for the entire perception pipeline **400.** The perception configuration service module **404** defines parameters such as sensor calibration, object classification thresholds, fusion parameters, and other key configurations that govern the operation of the perception pipeline **400.**

The perception node **406** serves as a processing unit that coordinates the flow of data through the perception pipeline. In an embodiment, the perception module may also include the first NPU and the second NPU. The perception node **406** acts as an intermediary layer that facilitates communication between the fusion module **402,** the object detection module **408,** the tracker module **414,** and other components within the perception pipeline **400.** The perception node ensures that data is properly routed to the appropriate modules for processing, enabling efficient handling of data and preventing bottlenecks in the system. The object detection module **408** is configured to identify and classify objects within the 3D point cloud data. For example, the object detection module **408** may use machine learning algorithms or template matching techniques to detect objects such as vehicles, pedestrians, walls, or other obstacles in the operational area. Once an object is detected, it is assigned a label and classified as either a dynamic object (e.g., a moving vehicle or pedestrian) or a static object (e.g., a parked vehicle or wall). A template matching module **410** is configured to perform template matching on the first 3D point cloud data and the second 3D point cloud data to identify known object shapes and structures. It compares the detected data against predefined templates or patterns of objects, such as vehicles, pedestrians, or infrastructure. In this regard, at **S4.1,** the first 3Dpoint cloud data and the second 3D point cloud data is processed and converted to be compatible with the template matching module. The raw point cloud data is pre-processed to extract relevant features and structures, making it easier to match with predefined object templates. Further, at **S4.2,** the filtered point cloud data is provided to the object detection module **408.** This step ensures that noise and irrelevant data are removed, leaving only the data relevant to object detection based on the template matching. Background module **412** is configured to focus on filtering out static objects or background elements from first and the second 3D point cloud data. It distinguishes between moving objects and stationary objects, ensuring that the perception pipeline concentrates on the objects that pose a dynamic threat, such as moving vehicles or pedestrians. By separating background elements from dynamic objects, the background module reduces the processing burden and improves the efficiency of the object tracking system. Now, the object detection module **408** provides detected data to a tracker module **414.** After objects are detected, the tracker module continuously tracks a movement associated with the detected object within the operational area. It uses position, speed, and direction data to predict the future trajectory of dynamic objects and update their locations over time. The tracker module is responsible for ensuring that moving objects are accurately followed and that any changes in position are reflected in real time. To this end, a dynamic object aggregator module **416** is configured to aggregate the data from the dynamic objects detected and tracked within the operational area **104.** It consolidates the data from the tracker module and organizes it for further analysis, such as collision prediction and avoidance. At **S4.3,** the car objects are passed to the dynamic object aggregator module **416.** The dynamic aggregator module **416** consolidates the data related to vehicle-type objects and prepares it for further analysis. The dynamic object aggregator ensures that vehicle data is handled separately from other object types, enabling more accurate tracking and collision prediction. Now, at **S4.4,** dynamic objects are detected and tracked.

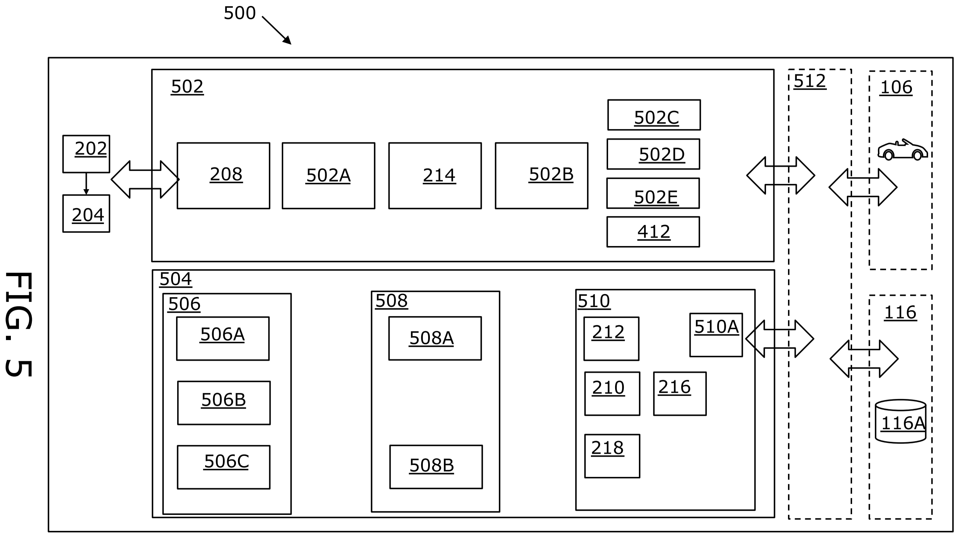

Referring to FIG. 5, illustrated is a block diagram **500** representing a relation between an environment model **502** and a motion planner **504** of a system for generating an object tracking data for an operational area, in accordance with an embodiment of the present disclosure. The environmental model **502** comprises an object classification module **502A** configured to classify the dynamic objects and the static objects, a vehicle identification (ID) generation module **502B** configured to assign IDs to the objects after the classification. The environmental model **502** further comprises a dynamic object module **502C,** which is responsible for classifying and processing moving objects, such as vehicles or pedestrians, within the operational area, a static object module **502D** configured to identify and classify stationary objects, including walls, barriers, and parked vehicles and a static reference module **502E** maintaining reference data for static objects, ensuring accurate mapping and positioning of stationary structures in the operational environment, the perception pipeline module **208,** vehicle localization module **214,** and the background module.

Further, the motion planner **504** may comprise a high definition (HD) map module **506,** a path planner **508** and a trajectory planner **510.** The HD map module **506** provides detailed, real-time mapping of the operational area, ensuring accurate navigation. The path planner **508** generates a feasible path for the vehicle **106** based on HD map data received from the HD map module **506,** while the trajectory planner **510** refines the path into a precise trajectory, considering dynamic obstacles and ensuring optimal movement towards the vehicle's destination. These components work together to guide the vehicle safely and efficiently through the operational environment. Additionally, the HD map module **506** may comprise a drivable area **506A,** a planning tool **506B,** and a driving rule module **506C.** The drivable area **506A** defines the regions in the operational environment where the vehicle can safely travel. The planning tool **506B** helps in optimizing vehicle routes based on the drivable area and operational constraints. The driving rule module **506C** integrates traffic regulations and safety protocols, ensuring that the vehicle follows appropriate legal and operational guidelines while navigating the environment. According to one embodiment, the path planner module **508** comprises a mission management module **508A** and a real-time rerouting module **508B.** The mission management module **508A** is responsible for defining and managing the vehicle's overall route based on its mission objectives, ensuring the vehicle follows a planned trajectory to reach its destination. The real-time rerouting module **508B** dynamically adjusts the planned path in response to changing conditions, such as obstacles, traffic, or other unforeseen circumstances, ensuring the vehicle can continue its mission safely and efficiently. To this end, the trajectory planner module **510** comprises the driving interface module **210,** a collision avoidance module **222,** the odometry module **216,** the path tracking module **218,** and a vehicle interface module **510A.** The driving interface module **210** facilitates communication between the trajectory planner and the vehicle's control system, enabling it to execute planned paths. The collision avoidance module **222** detects and mitigates potential collisions by adjusting the vehicle's trajectory in real time. The odometry module **216** tracks the vehicle's position and movement to ensure accurate navigation. The path tracking module **218** ensures that the vehicle follows the planned trajectory with minimal deviation. The vehicle interface module **510A** connects the trajectory planner to the vehicle's hardware systems, ensuring smooth execution of planned movements and real-time adjustments. Furthermore, data from the environmental model **502** and the motion planner **504** may be transmitted to the vehicle **106** through backend **512.** Also, the data may be stored in the ERP database for further use.

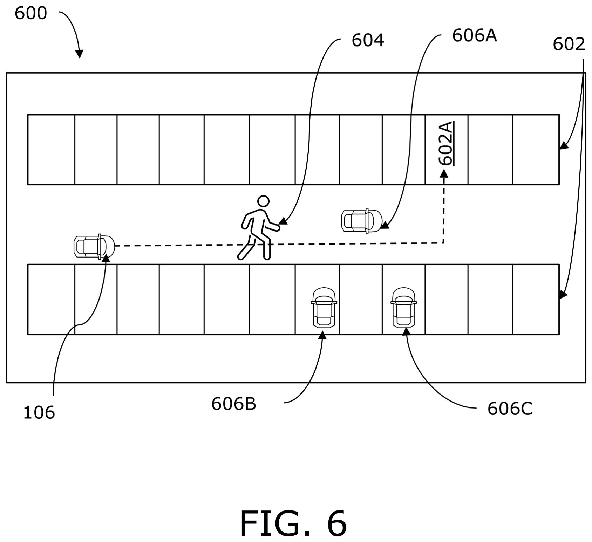

Referring to FIG. 6, illustrated is an exemplary scenario of an environment **600** where a system for generating an object tracking data for an operational area is installed, in accordance with an embodiment of the present disclosure. The environment **600** comprises a set of parking lanes **602,** a pedestrian **604,** a moving vehicle **606A,** a set of parked vehicles **606B-C,** and the vehicle **106,** which is heading towards a parking spot **602A.** In this scenario, the system **100** is implemented to navigate the vehicle **106** towards the designated parking spot **602A** while detecting and responding to objects within the environment. The set of parking lanes **602** provides structured space for the vehicle to park, while the pedestrian **604** is detected as an obstacle within the vehicle's path. The moving vehicle **606A** may also be detected by the system as it moves along its own path, potentially affecting the vehicle's trajectory. Additionally, the set of parked vehicles **606B-C** are considered static objects that must be accounted for in the planning process to prevent any potential collision. The perception pipeline is designed to process incoming data, classify objects in the environment **600,** and predict object movements for effective decision-making. The system processes real-time data to ensure smooth parking maneuvers, and in the event of any detected obstacles, such as a pedestrian or moving vehicle, the vehicle's motion is adjusted dynamically to avoid collisions and complete the parking task efficiently.

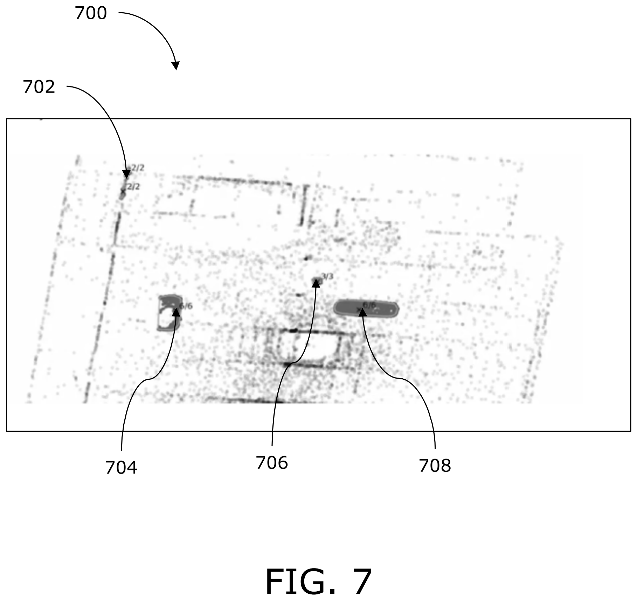

Referring to FIG. 7, illustrated is a digital representation **700** of the exemplary scenario of an environment **600** where a system for generating an object tracking data for an operational area, in accordance with an embodiment of the present disclosure. The digital representation **700** depicting the digitally form environment **600** formed by combining the first 3D point cloud data associated and the second 3D point cloud data. In this regard, the term "*digital representation*" refers to a digitally formed model of the environment **600,** generated by integrating the first 3D point cloud data captured by the first set of sensors and the second 3D point cloud data captured by the second set of sensors. This combined data creates an enhanced, detailed representation of the environment, which is then utilized by the system for object detection and tracking.

For example, consider a set of points **702** detected by two sensors of the first and the second sets of sensors. The set of points may be represented in the digital model with less emphasis or a lighter visual representation, since it is based on fewer data sources, and the reliability of this detection is comparatively lower. In contrast, a point detected by six sensors, such as the digital vehicle **704,** or **708,** will be represented more prominently and with a darker or bolder visual indicator in the digital representation. The higher number of sensors capturing the same point enables more accurate data fusion and validation, ensuring a more reliable depiction of the vehicle's position and characteristics.

Similarly, a digital pedestrian **706,** detected by three sensors of the first and the second sets of sensors, may be represented with a moderate level of prominence in the digital model. This indicates a reasonably reliable detection, though not as certain as the vehicle detected by six sensors. The darker and more pronounced appearance of points in the digital representation corresponds directly to the number of sensors detecting that particular object. Thus, the more sensors involved in detecting an object, the more precise and dependable the data representation, which is reflected in the intensity or visibility of the points in the digital map. This system improves situational awareness and enhances the tracking and interaction with objects in the environment.

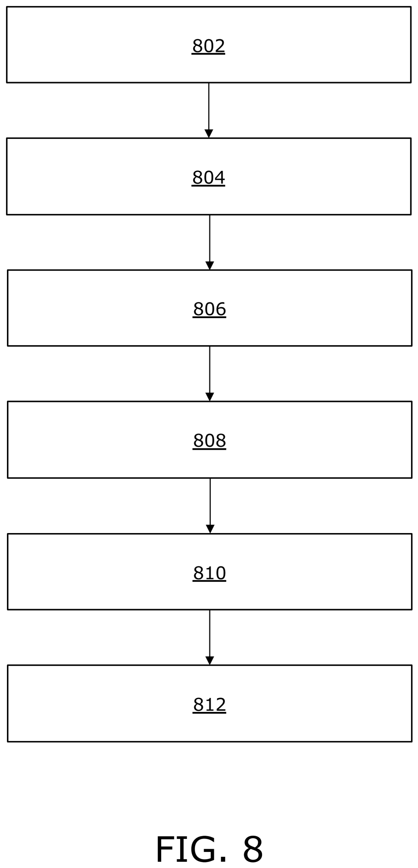

Referring to FIG. 8, illustrated are steps of a method for generating an object tracking data for an operational area **104,** in accordance with an embodiment of the present disclosure. At step **802,** the first set of sensors, arranged to monitor the first subarea of the operational area in which the vehicle is present, is activated to capture a first three-dimensional (3D) point cloud data of the first subarea, wherein each point in the first 3D point cloud data is captured by at least two sensors of the first set of sensors. At step **804,** a second set of sensors, arranged to monitor a second subarea of the operational area in which the vehicle is present, is activated to capture a second three-dimensional (3D) point cloud data of the second subarea, wherein each point in the second 3D point cloud data is captured by at least two sensors of the second set of sensors. At **806,** the 3D point cloud data of the first and second sets of sensors is received by a first Node Processing Unit and a second Node Processing Unit, communicably coupled to the first set of sensors and the second set of sensors, respectively, via a communication network. At step **808,** the 3D point cloud data of the first and second sets of sensors is processed by the first NPU and the second NPU to create a first tracking data of objects in the first subarea and the second tracking data of objects in the second subarea, respectively. At step **810,** the first tracking data and the second tracking data are transmitted to a central control unit communicably coupled to the first NPU and the second NPU. At step **812,** the first tracking data and the second tracking data are combined by the central control unit to generate the object tracking data for the operational area.

The aforementioned steps are only illustrative and other alternatives can also be provided where one or more steps are added, one or more steps are removed, or one or more steps are provided in a different sequence without departing from the scope of the claims herein.

## Claims

1. A system (100) for generating an object tracking data for an operational area (104), the system comprising:
a first set of sensors (102A-102E) arranged to monitor a first subarea (104A) of the operational area in which a vehicle (106) is present, wherein the first set of sensors is arranged to capture a first three-dimensional (3D) point cloud data of the first subarea, and wherein each point in the first 3D point cloud data is captured by at least two sensors of the first set of sensors;
a second set of sensors (108A-108E) arranged to monitor a second subarea (104B) of the operational area in which the vehicle (106) is present, wherein the second set of sensors is arranged to capture a second three-dimensional (3D) point cloud data of the second subarea, and wherein each point in the second 3D point cloud data is captured by at least two sensors of the second set of sensors;
a first Node Processing Unit (112A) communicably coupled to the first set of sensors via a communication network, wherein the first Node Processing Unit is configured to:
receive the first 3D point cloud data from the first set of sensors (102A-102E);
process the first 3D point cloud data to create a first tracking data of objects in the first subarea; and
transmit the first tracking data to a central control unit (114) communicably coupled to the first Node Processing Unit;
a second Node Processing Unit (112B) communicably coupled to the second set of sensors via a communication network, wherein the second Node Processing Unit is configured to:
receive the second 3D point cloud data from the second set of sensors (108A-108E);
process the second 3D point cloud data to create a second tracking data of objects in the second subarea; and
transmit the second tracking data to the central control unit communicably coupled to the second Node Processing Unit; and
the central control unit configured to combine the first tracking data and the second tracking data to generate the object tracking data for the operational area.

2. The system (100) of claim 1, wherein
the first Node Processing Unit (112A) is further configured to validate each point in the first 3D point cloud data by comparing each point originating from at least two sensors from the first set of sensors; and
the second Node Processing Unit (112B) is further configured to validate each point in the second 3D point cloud data by comparing each point originating from at least two sensors from the second set of sensors.

3. The system (100) of claim 1 or 2, wherein the first Node Processing Unit (112A) and the second Node Processing Unit (112B) are further configured to:
classify objects as at least one dynamic object or at least one static object present within the first subarea and the second subarea, respectively; and
assign a confidence level to each of the at least one dynamic object and the at least one static object, based on number of sensors from amongst the first set of sensors (102A-102E) and the second set of sensors (108A-108E), respectively, capturing each point corresponding to each of the at least one dynamic object or the at least one static object.

4. The system (100) of claim 3, wherein at least one of the first Node Processing Unit (112A) and the second Node Processing Unit (112B) is further configured to:
detect and track the at least one dynamic object and/or the at least one static object from amongst the objects present within the first subarea and/or the second subarea, respectively, with respect to a position of the vehicle;
analyse at least one of: a position, a speed, a direction of motion, and a path of the at least one dynamic object, and a position and a size of the at least one dynamic object, to predict a potential collision between the vehicle and the at least one dynamic object and/or at least one static object in the first subarea and/or the second subarea; and
transmit tracking data to the central control unit (114) to adjust the at least one vehicle parameter of the vehicle to prevent the collision between the vehicle and the at least one dynamic object and/or at least one static object.

5. The system (100) of any of the preceding claims, wherein the first Node Processing Unit (112A) and the second Node Processing Unit (112B) are further configured to filter the first 3D point cloud data and the second 3D point cloud data, respectively, by using a filtering algorithm, and wherein the filtering involves voxelization of the first 3D point cloud data and the second 3D point cloud data, and separation of static points from dynamic points that are detected based on the voxelization.

6. The system (100) of claim 5, wherein the voxelization of the first 3D point cloud data and the second 3D point cloud data comprises:
converting the first 3D point cloud data and the second 3D point cloud data into a voxel grid, wherein the voxel grid represents a three-dimensional space; and
downsampling the voxel grid by reducing resolution around a static object and by maintaining higher resolution around a dynamic object.

7. The system (100) of claim 5-6, wherein the filtering algorithm comprises at least one of: a template matching filter, a Kalman filter.

8. The system (100) of any of the preceding claims, wherein a digital map is updated in real-time at a frequency range of 5-30 Hz.

9. The system (100) of any of the preceding claims, wherein the first Node Processing Unit (112A) and the second Node Processing Unit (112B) are further configured to generate a corresponding object list, wherein the object list indicates at least one of: a classification, a location, and a movement of each object present in the operational area.

10. The system (100) of any of the preceding claims, wherein the system is powered by a distributed power network.

11. The system (100) of any of the preceding claims, wherein the speed of the vehicle is decreased, based on at least one of: the size of the safety zone, a speed of the at least one dynamic object, a position of the at least one dynamic object and/or the at least one static object.

12. The system (100) of any of the preceding claims, wherein a given sensor from amongst the first set of sensors (102A-102E) or the second set of sensors (108A-108E) is implemented as a Light Detection and Ranging (LiDAR) sensor.

13. The system (100) of claim 3, wherein the at least one static object is any one of: a wall, a parked vehicle, a barrier, a pothole, an equipment.

14. The system (100) of claim 3, wherein the at least one dynamic object is any one of: a moving vehicle, a pedestrian, an animal.

15. A method for generating an object tracking data for an operational area, the method comprising:
activating a first set of sensors (102A-102E), arranged to monitor a first subarea of the operational area in which a vehicle is present, to capture a first three-dimensional (3D) point cloud data of the first subarea, wherein each point in the first 3D point cloud data is captured by at least two sensors of the first set of sensors;
activating a second set of sensors (108A-108E), arranged to monitor a second subarea of the operational area in which the vehicle is present, to capture a second three-dimensional (3D) point cloud data of the second subarea, wherein each point in the second 3D point cloud data is captured by at least two sensors of the second set of sensors;
receiving, by a first Node Processing Unit (112A) and a second Node Processing Unit (112B), communicably coupled to the first set of sensors and the second set of sensors, respectively, via a communication network, the 3D point cloud data of the first and second sets of sensors;
processing, by the first Node Processing Unit (112A) and the second Node Processing Unit (112B), the 3D point cloud data of the first and second sets of sensors to create a first tracking data of objects in the first subarea and a second tracking data of objects in the second subarea, respectively;
transmitting the first tracking data and the second tracking data to a central control unit (114) communicably coupled to the first Node Processing Unit (112A) and the second Node Processing Unit (112B); and
combining, by the central control unit, the first tracking data and the second tracking data to generate the object tracking data for the operational area.

16. A computer program product comprising a non-transitory machine-readable data storage medium having stored thereon program instructions that, when executed by a processor, cause the processor to execute steps of a method of claim 15.
